# EUROPÄISCHE PATENTANMELDUNG

(11) **EP 2 120 067 A1**
(43) Veröffentlichungstag der Anmeldung: **18.11.2009**
(21) Anmeldenummer: 09006103.7
(22) Anmeldetag: 05.05.2009
(51) Int. Cl.: G01V 8/12, B65C 9/42

(54) **Sensor zur Erfassung von Objekten in einem Erfassungsbereich**

(30) Priorität: 16.05.2008 DE 102008023928; 03.06.2008 DE 102008026603
(71) Anmelder: Leuze electronic GmbH + Co. KG, 73277 Owen/Teck (DE)
(72) Erfinder: Merk, Thomas, 73240 Wendlingen (DE); Patz, Jürgen, 72660 Beuren (DE); Forkl, Matthias, 73277 Owen/Teck (DE)
(74) Vertreter: Ruckh, Rainer Gerhard

(57) **Zusammenfassung**

Der erfindungsgemäße Sensor dient zur Erfassung von Objekten in einem Erfassungsbereich. Der Sensor umfasst ein Sensorsignale generierendes Sensorelement und eine Auswerteeinheit (6), in welcher durch eine Schwellwertbewertung der Amplituden des Sensorsignals ein binäres Schaltsignal generiert wird. Ein erster Schaltzustand des Schaltsignals signalisiert die Anwesenheit eines zu detektierenden Objekts und ein zweiter Schaltzustand signalisiert die Abwesenheit des zu detektierenden Objekts. In der Auswerteeinheit (6) wird durch eine Bewertung der Amplituden von dem ersten und dem zweiten Schaltzustand entsprechenden Sensorsignal eine Kenngröße für die Zuverlässigkeit des generierten Schaltsignals generiert.

## Beschreibung

Die Erfindung betrifft einen Sensor zur Erfassung von Objekten in einem Erfassungsbereich.

Bei den Sensoren der in Rede stehenden Art handelt es sich um binär schaltende Sensoren, mit welchen eine Anwesenheitskontrolle von Objekten durchgeführt wird. Generell weisen derartige Sensoren wenigstens ein Sensorelement auf, das zur Detektion der Objekte Sensorsignale generiert. In einer Auswerteeinheit wird durch eine Amplitudenbewertung der Sensorsignale mit wenigstens einem Schwellwert ein binäres Schaltsignal mit zwei Schaltzuständen generiert. Die Schaltzustände geben an, ob ein Objekt detektiert wurde oder nicht.

Eine typische Anwendung eines derartigen Sensors ist die Detektion von Etiketten auf Trägermaterialien. Die hierfür eingesetzten Sensoren sind typischerweise als optische, kapazitive oder Ultraschallsensoren ausgebildet. Im Fall eines kapazitiven Sensors ist das Sensorelement von einer Kondensatoranordnung gebildet, wobei je nachdem ob nur das Trägermaterial oder eine auf dem Trägermaterial angebrachte Etikette detektiert wird, das elektrische Feld als Sensorsignal in unterschiedlicher Weise beeinflusst wird.

Optische Sensoren oder Ultraschallsensoren arbeiten zur Detektion derartiger Etiketten nach dem Transmissionsprinzip. Der optische Sensor weist dabei einen Lichtstrahlen emittierenden Sender und einen Lichtstrahlen empfangenden Empfänger auf, die beidseits des Trägermaterials, auf welchem in vorgegebenen Abständen Etiketten angeordnet sind, positioniert sind. Je nachdem ob die Lichtstrahlen nur auf das Trägermaterial oder auf eine auf dem Trägermaterial angeordnete Etikette treffen, werden die Lichtstrahlen weniger oder mehr geschwächt. Dementsprechend niedriger oder höher ist die Amplitude des am Empfänger registrierten Sensorsignals.

Ein Ultraschallsensor weist einen entsprechenden Aufbau auf. Hier sind ein Ultraschallwellen emittierender Sender und ein Ultraschallwellen empfangender Empfänger beidseits des Trägermaterials mit den Etiketten angeordnet, wobei die Ultraschallwellen unterschiedlich geschwächt werden, wenn sie nur auf das Trägermaterial oder auf eine Etikette auf dem Trägermaterial treffen.

Da sowohl die Etiketten als auch die Trägermaterialien aus dünnen Folien bestehen, ist der Signalunterschied bei einer Detektion des Trägermaterials mit oder ohne Etikette unabhängig von der Ausbildung des Sensors gering, so dass nur mit einer an die Applikation angepassten Festlegung des Schwellwerts eine Unterscheidung der Etiketten vom Trägermaterial möglich ist.

Jedoch können auch dann noch Probleme bei der Etikettendetektion auftreten, beispielsweise dann, wenn mit einem optischen Sensor bedruckte und unbedruckte Etiketten erkannt werden müssen, oder wenn mit einem kapazitiven Sensor besonders kleine Etiketten mit kleinen Lücken erkannt werden müssen oder mit diesem metallisierte Etiketten erkannt werden müssen. Probleme treten auch bei Ultraschallsensoren auf, wenn Etiketten aus Materialien, bei welchen sich die akustische Impedanz ändert, erkannt werden müssen. Hierzu gehören insbesondere Etiketten aus Polypropylen oder Polyethylen.

Derartige Effekte können bewirken, dass der Sensor an der Detektionsgrenze arbeitet, so dass es zu Fehlschaltungen, das heißt fehlerhaften Schaltsignalen kommt.

Der Erfindung liegt die Aufgabe zugrunde, einen Sensor der eingangs genannten Art so auszubilden, dass dieser möglichst zuverlässig und fehlersicher arbeitet.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Sensor dient zur Erfassung von Objekten in einem Erfassungsbereich. Der Sensor umfasst ein Sensorsignale generierendes Sensorelement und eine Auswerteeinheit, in welcher durch eine Schwellwertbewertung der Amplituden des Sensorsignals ein binäres Schaltsignal generiert wird. Ein erster Schaltzustand des Schaltsignals signalisiert die Anwesenheit eines zu detektierenden Objekts und ein zweiter Schaltzustand signalisiert die Abwesenheit des zu detektierenden Objekts. In der Auswerteeinheit wird durch eine Bewertung der Amplituden von dem ersten und dem zweiten Schaltzustand entsprechenden Sensorsignalen eine Kenngröße für die Zuverlässigkeit des generierten Schaltsignals generiert.

Durch die erfindungsgemäße Ermittlung der Kenngröße kann bestimmt werden, ob der Sensor noch in einem sicheren Bereich oder bereits an der Detektionsgrenze arbeitet. Damit erfolgt eine Kontrolle des Sensors wie hoch die Fehlersicherheit der von ihm generierten Schaltsignale ist. Durch Angabe der Kenngröße oder ein Signal, das von der Kenngröße abgeleitet ist, wird dem Benutzer des Sensors der Status, insbesondere die Fehlersicherheit der von ihm generierten Schaltsignale, angezeigt. In einer besonders vorteilhaften Ausfiihrungsform wird vom Sensor ein Warnsignal ausgegeben, mit welchem dem Benutzer des Sensors signalisiert wird, dass die Zuverlässigkeit des Schaltsignals beeinträchtigt ist. Der Benutzer kann dann geeignete Gegenmaßnahmen einleiten, beispielsweise eine neue Einstellung des Schwellwerts vornehmen oder gegebenenfalls sogar den Betrieb des Sensors stilllegen.

In einer weiteren vorteilhaften Ausführungsform kann im Sensor anhand der ermittelten Kenngröße auch selbsttätig eine Prozessoptimierung durchgeführt werden, beispielsweise derart, dass während der Objektdetektion der Schwellwert selbsttätig in Abhängigkeit der registrierten Sensorsignale nachgeführt wird.

Die Ermittlung der Kenngröße erfolgt erfindungsgemäß derart, dass separat Sensorsignale die dem ersten und zweiten Schaltzustand des Schaltsignals zugeordnet werden, ausgewertet werden. Die Auswertung kann durch Mittelwertbildung der Sensorsignale erfolgen. Alternativ werden Häufigkeitsverteilungen in Abhängigkeit der Amplituden der Sensorsignale gebildet. Daraus wird insbesondere bestimmt, wie groß die Abstände der Sensorsignale der einzelnen Schaltzustände relativ zum Schwellwert sind, wobei vorteilhaft auch die Streuungen der Sensorsignale berücksichtigt werden. Die daraus ermittelte Kenngröße berücksichtigt dabei, dass die Zuverlässigkeit des Schaltsignals umso höher ist, desto größer die Abstände der Sensorsignale der beiden Schaltzustände zu dem Schwellwert sind.

Der erfindungsgemäße Sensor kann generell als optischer oder kapazitiver Sensor oder auch als Ultraschallsensor ausgebildet sein. Generell kann der Sensor auch eine Kombination eines optischen Sensors, kapazitiven Sensors und/oder eines Ultraschallsensors darstellen, wobei der Sensor dann entsprechend mehrere unterschiedliche Sensorelemente aufweist.

Die Erfindung wird im Folgenden anhand der Zeichnungen erläutert. Es zeigen:
- Figur 1:: Schematische Darstellung eines Ultraschallsensors zur Detektion von Etiketten auf Trägermaterial
- Figur 2:: Signalverlauf bei der Etikettendetektion mit dem Ultraschallsen- sor gemäß Figur 1.
- Figur 3:: Amplitudenabhängige Häufigkeitsverteilung bei der Etikettende- tektion mit dem Ultraschallsensor gemäß Figur 1.

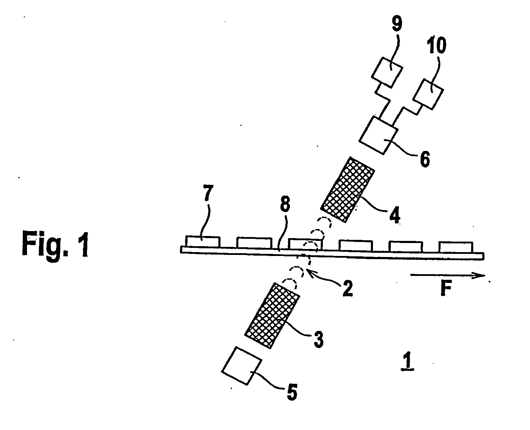

Figur 1 zeigt schematisch den Aufbau eines Ultraschallsensors 1. Der Ultraschallsensor 1 weist einen Ultraschallwellen 2 emittierenden Sender 3 und einen Ultraschallwellen 2 empfangenden Empfänger 4 auf. Der Sender 3 wird von einer Steuereinheit 5 angesteuert, die vorzugsweise mit dem Sender 3 in einem nicht dargestellten Gehäuse integriert ist. Der Empfänger 4 ist an eine Auswerteeinheit 6 angeschlossen, in welcher die Auswertung der am Ausgang des Empfängers 4 anstehenden Empfangssignale erfolgt. Die Auswerteeinheit 6, die von einem Mikroprozessor oder dergleichen gebildet ist, ist bevorzugt mit dem Empfänger 4 in einem nicht dargestellten Gehäuse integriert. Besonders vorteilhaft sind sämtliche Komponenten des Ultraschallsensors 1 in einem gabelförmigen Gehäuse integriert.

Der Ultraschallsensor 1 arbeitet nach dem Transmissionsprinzip, das heißt der Sender 3 und Empfänger 4 sind beidseits der zu detektierenden Objekte angeordnet, welche im vorliegenden Fall von Etiketten 7 gebildet sind, die auf einem Trägermaterial 8 angeordnet sind. Das Trägermaterial 8 wird in einer Förderrichtung F gefördert. Die Etiketten 7 sind in Förderrichtung F in regelmäßigen Abständen auf dem Trägermaterial 8 fixiert. Die vom Ultraschallsensor 1 emittierten Ultraschallwellen 2 sind auf die Objekte gerichtet. Der die Objekte durchsetzende Anteil der Ultraschallwellen 2 trifft auf den Empfänger 4. Die dabei generierten Sensorsignale, das heißt Empfangssignale, werden in der Auswerteeinheit 6 zur Generierung eines Schaltsignals ausgewertet, welches über einen Schaltausgang 9 des Ultraschallsensors 1 ausgegeben wird. Weiterhin ist ein Warnausgang 10 vorgesehen. Beide Ausgänge 9, 10 werden von der Auswerteeinheit 6 angesteuert.

Die Generierung des Schaltsignals erfolgt durch eine Schwellwertbewertung der Empfangssignale. Die beiden Schaltzustände des Schaltsignals geben dann an, ob eine Etikette 7 detektiert wurde oder nicht.

Die Schwellwertbewertung erfolgt vorteilhaft während eines Einlernvorgangs, wobei während des Einlernvorgangs bereits die später im Arbeitsbetrieb zu detektierenden Objekte vom Ultraschallsensor 1 erfasst werden.

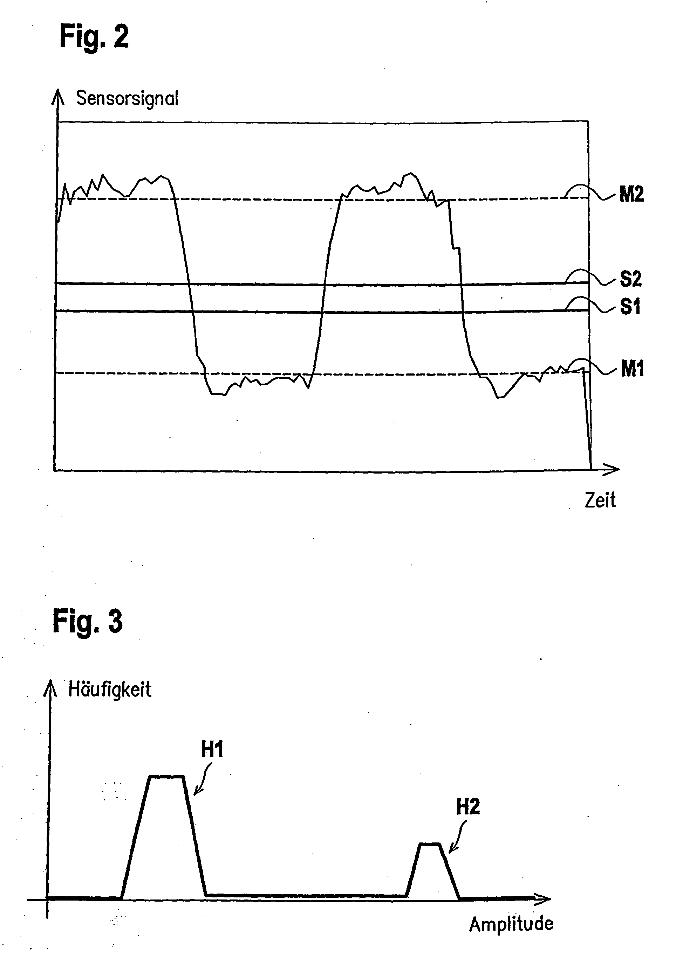

Die Schwellwertbestimmung ist in Figur 2 veranschaulicht. Figur 2 zeigt den zeitlichen Verlauf der Sensorsignale, das heißt der Empfangssignale des Empfängers 4 bei der Abtastung des Trägermaterials 8 mit den Etiketten 7. Das Sensorsignal weist einen näherungsweise binären Signalverlauf derart auf, dass hohe Signalwerte bei der Detektion des Trägermaterials 8 erhalten werden, und dass niedrige Signalwerte erhalten werden, wenn die Etiketten 7 auf dem Trägermaterial 8 erfasst werden.

Während des Einlernvorgangs erfolgt in der Auswerteeinheit 6 des Ultraschallsensors 1 selbsttätig eine Schwellwertbestimmung anhand dieses Signalverlaufs. Hierzu werden separat die hohen und niedrigen Signalwerte gemittelt. In Figur 2 ist mit M1 der Mittelwert für die niedrigen Signalwerte und mit M2 der Mittelwert für die hohen Signalwerte bezeichnet. Aus diesen Mittelwerten werden die beiden in Figur 2 dargestellten Schwellwerte S1, S2 abgeleitet, wobei der Bereich zwischen den Schwellwerten einen Hysteresebereich bildet. Die Schwellwerte S1, S2 liegen etwa in der Mitte zwischen den Mittelwerten M1, M2.

In dem auf den Einlernvorgang folgenden Arbeitsbetrieb des Ultraschallsensors 1 werden die aktuellen Empfangssignale mit den Schwellwerten S1, S2 bewertet. Liegt das Empfangssignal unterhalb des Schwellwerts S1, gilt eine Etikette 7 als erkannt, wodurch das Schaltsignal einen entsprechenden ersten Schaltzustand einnimmt. Liegt das Empfangssignal oberhalb des Schwellwerts S2 gilt das Trägermaterial 8 (alleine ohne Etikette 7) als erkannt, wodurch das Schaltsignal einen entsprechenden zweiten Schaltzustand einnimmt.

Anhand des Signalverlaufs erfolgt in der Auswerteeinheit 6 während des Einlernvorgangs, und gegebenenfalls auch später im Arbeitsbetrieb des Ultraschallsensors 1, eine Ermittlung wenigstens einer Kenngröße für die Zuverlässigkeit des generierten Schaltsignals. Hierzu werden zunächst die Abstände der Mittelwerte M1, M2 zu den Schwellwerten ermittelt. Je kleiner die Abstände sind, desto unsicherer das Schaltsignal, da dann durch Messwertschwankungen Fehldetektionen auftreten können, das heißt Messwerte den falschen Schaltzuständen zugeordnet werden können. In die Kenngröße können weiterhin zusätzlich die ermittelten Messwertschwankungen der zur Ermittlung der Mittelwerte M1, M2 herangezogenen Signale erfasst werden, wodurch die Kenngröße noch aussagefähiger wird.

Ergibt die ermittelte Kenngröße, dass eine geforderte Mindestzuverlässigkeit für das Schaltsignal nicht mehr gewährleistet ist, wird über den Warnausgang 10 ein Warnsignal ausgegeben, das dem Benutzer die mangelhafte Zuverlässigkeit des Schaltsignals anzeigt. Zusätzlich oder alternativ kann in der Auswerteeinheit 6 eine erneute Schwellwertbestimmung durchgeführt werden.

In Figur 3 ist eine weitere Methode zur Ableitung von Kenngrößen für die Zuverlässigkeit des Schaltsignals veranschaulicht. Figur 3 zeigt die Häufigkeitsverteilung von ermittelten Sensorsignalen bei der Detektion der Etiketten 7 auf dem Trägermaterial 8 mit dem Ultraschallsensor 1 gemäß Figur 1. Die Häufigkeitsverteilung wird derart aufgenommen, dass der Amplitudenbereich in eine diskrete Folge von Amplitudenbereichen unterteilt wird und dann die Signalwerte der Sensorsignale gezählt werden. Die Häufigkeitsverteilung gemäß Figur 3 zeigt eine erste Häufung H1 von Signalwerten bei kleinen Amplituden, die von der Etikettendetektion stammen und eine zweite Häufung H2 von Signalwerten bei großen Amplituden, die von der Detektion des Trägermaterials 8 stammen.

Zur Bestimmung der Kenngröße für die Zuverlässigkeit des Schaltsignals werden die Verteilungen H1, H2 ausgewertet, und zwar hinsichtlich der Breite und Höhe der Verteilungen sowie der relativen Lagen der Verteilungen. Dabei ist die Zuverlässigkeit des Schaltsignals umso kleiner, je dichter die Verteilungen H1, H2 zusammen liegen und desto breiter die Verteilungen sind. Im Grenzfall zeigt die Häufigkeitsverteilung sogar nur ein Maximum. Dann ist eine Etikettendetekion überhaupt nicht mehr möglich. Auch in diesem Fall erfolgt über den Warnausgang 10 eine Ausgabe des Warnsignals, falls die mittels der Kenngröße definierte Zuverlässigkeit des Schaltsignals eine Grenze unterschreitet.

### Bezugszeichenliste

- (1): Ultraschallsensor
- (2): Ultraschallwellen
- (3): Sender
- (4): Empfänger
- (5): Steuereinheit
- (6): Auswerteeinheit
- (7): Etikette
- (8): Trägermaterial
- (9): Schaltausgang
- (10): Warnausgang

## Patentansprüche

1. Sensor zur Erfassung von Objekten in einem Erfassungsbereich, mit einem ein Sensorsignal generierenden Sensorelement und mit einer Auswerteeinheit (6), in welcher durch eine Schwellwertbewertung der Amplituden des Sensorsignals ein binäres Schaltsignal generiert wird, wobei ein erster Schaltzustand des Schaltsignals die Anwesenheit eines zu detektierenden Objekts und ein zweiter Schaltzustand die Abwesenheit des zu detektierenden Objekts signalisiert, **dadurch gekennzeichnet, dass** in der Auswerteeinheit (6) durch eine Bewertung der Amplituden von dem dem ersten und zweiten Schaltzustand entsprechenden Sensorsignalen eine Kenngröße für die Zuverlässigkeit des generierten Schaltsignals generiert wird.

2. Sensor nach Anspruch 1, **dadurch gekennzeichnet, dass** dieser einen Schaltausgang (9) zur Ausgabe des Schaltsignals aufweist.

3. Sensor nach einem der Ansprüche 1 oder 2, **dadurch gekennzeichnet, dass** dieser einen Warnausgang (10) zur Ausgabe der Kenngröße aufweist.

4. Sensor nach einem der Ansprüche 1 bis 3, **dadurch gekennzeichnet, dass** die Ermittlung der Kenngröße fortlaufend während des Sensorbetriebs erfolgt.

5. Sensor nach einem der Ansprüche 1 bis 3, **dadurch gekennzeichnet, dass** die Ermittlung der Kenngröße während eines Einlernvorgangs zur Bestimmung des Schwellwerts erfolgt.

6. Sensor nach einem der Ansprüche 1 bis 5, **dadurch gekennzeichnet, dass** zur Ermittlung der Kenngröße Häufigkeitsverteilungen der Amplituden von Sensorsignalen bestimmt werden.

7. Sensor nach Anspruch 6, **dadurch gekennzeichnet, dass** zur Ermittlung der Kenngröße die Breiten von Häufigkeitsverteilungen ausgewertet werden.

8. Sensor nach einem der Ansprüche 6 oder 7, **dadurch gekennzeichnet, dass** zur Ermittlung der Kenngröße die Lagen der Maxima der Häufigkeitsverteilung ausgewertet werden.

9. Sensor nach Anspruch 8, **dadurch gekennzeichnet, dass** zur Ermittlung der Kenngröße die Relativlagen der Maxima der Häufigkeitsverteilung relativ zu einem Schwellwert, der zur Schwellwertbewegung herangezogen wird, ausgewertet werden.

10. Sensor nach einem der Ansprüche 1 bis 5, **dadurch gekennzeichnet, dass** zur Ermittlung der Kenngröße jeweils Mittelwerte von dem ersten und dem zweiten Schaltzustand entsprechenden Sensorsignalen gebildet werden.

11. Sensor nach Anspruch 9, **dadurch gekennzeichnet, dass** die Mittelwerte mit einem Schwellwert, der zur Schwellwertbewertung herangezogen wird, verglichen werden.

12. Sensor nach einem der Ansprüche 1 bis 10, **dadurch gekennzeichnet, dass** die ermittelte Kenngröße zur Prozessoptimierung des Sensors verwendet wird.

13. Sensor nach einem der Ansprüche 1 bis 12, **dadurch gekennzeichnet, dass** mit diesem Etiketten (7) auf Trägermaterialien (8) detektierbar sind.

14. Sensor nach einem der Ansprüche 1 bis 13, **dadurch gekennzeichnet, dass** dieser ein optischer Sensor, ein Ultraschallsensor (1) oder ein kapazitiver Sensor oder eine Kombination eines optischen, kapazitiven und/oder Ultraschallsensors (1) ist.
